# EUROPEAN PATENT SPECIFICATION

(11) **EP 4 184 697 B1**
(45) Date of publication and mention of the grant of the patent: **08.04.2026**
(21) Application number: 22742741.6
(22) Date of filing: 07.01.2022
(51) Int. Cl.: H01M 10/613, H01M 50/209, H01M 50/50, H01M 50/358, H01M 50/204, H01M 50/35, H01M 50/367, H01M 50/30

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 22.01.2021 KR 20210009540
(43) Date of publication of application: 24.05.2023
(73) Proprietor: LG Energy Solution, Ltd., Seoul 07335 (KR)
(72) Inventor: LEE, So Jeong, Daejeon 34122 (KR); YOU, Jaehyun, Daejeon 34122 (KR); KIM, Young In, Daejeon 34122 (KR); KIM, Nam In, Daejeon 34122 (KR); JEONG, Jongha, Daejeon 34122 (KR)
(74) Representative: Goddar, Heinz J.
(86) International application number: PCT/KR2022/000266
(87) International publication number: WO 2022/158765

(56) References cited:
- CN-A- 110 265 749
- JP-A- 2008 066 306
- KR-A- 20090 000 292
- KR-A- 20190 122 474
- KR-A- 20190 122 474
- KR-A- 20200 069 720
- US-A1- 2020 266 506

## Description

### [Technical Field]

### Cross Citation with Related Application(s)

This application claims the benefit of Korean Patent Application No. 10-2021-0009540 filed on January 22, 2021, with the Korean Intellectual Property Office, the disclosure of which is incorporated herein by reference in its entirety.

The present invention relates to a battery module and a battery pack including the same, and more specifically, to a battery module capable of inducing and observing a gas flow inside the battery module, and a battery pack including the same.

### [Background Art]

In modern society, as the use of portable devices such as mobile phones, notebook computers, camcorders, and digital cameras has become commonplace, the development of technologies related to the mobile devices becomes active. Further, a rechargeable secondary battery is a measure to solve the air pollution of existing gasoline vehicles that use fossil fuels, and is used as a power source of an Electric Vehicle (EV), a Hybrid Electric Vehicle (HEV), a Plug-in Hybrid Electric Vehicle (P-HEV), and the like, so that the need for development of the secondary battery is increasing.

Currently commercialized secondary batteries include nickel cadmium batteries, nickel hydride batteries, nickel zinc batteries, lithium secondary batteries, and the like, and among them, the lithium secondary battery is in the spotlight for its advantages in that charge and discharge are freely performed because a memory effect is small, a self-discharge rate is very low, and energy density is very high, compared to the nickel-based secondary battery.

**The** lithium secondary battery mainly uses a lithium-based oxide and a carbon material as a positive electrode active material and a negative electrode active material, respectively. **The** lithium secondary battery includes an electrode assembly in which a positive electrode plate and a negative electrode plate, to which the positive electrode active material and the negative electrode active material are applied, respectively, are disposed with a separator interposed therebetween, and a battery case that seals and accommodates the electrode assembly together with an electrolyte.

**In** general, the lithium secondary battery may be classified into a can-type secondary battery in which the electrode assembly is embedded in a metal can, and a pouch-type secondary battery in which the electrode assembly is embedded in a pouch of an aluminum laminate sheet, according to a shape of the exterior material.

**In** the case of the secondary batteries used in small devices, two or three battery cells are disposed, but in the case of the secondary batteries used in middle and large devices, such as automobiles, a battery module in which the plurality of battery cells are electrically connected is used. **In** the battery module, the plurality of battery cells are connected to each other in series or in parallel to form a battery cell stack, so that capacity and output are improved. Further, one or more battery modules may be mounted together with various control and protection systems, such as a Battery Management System (BMS) and a cooling system, to form a battery pack.

On the other hand, the battery module, in order to protect the battery cell stack from an external impact, heat, or vibration, may include a module frame of which front and rear surfaces are opened in the inner space for accommodating the battery cell stack and an end plate that covers the front and rear surfaces of the module frame.

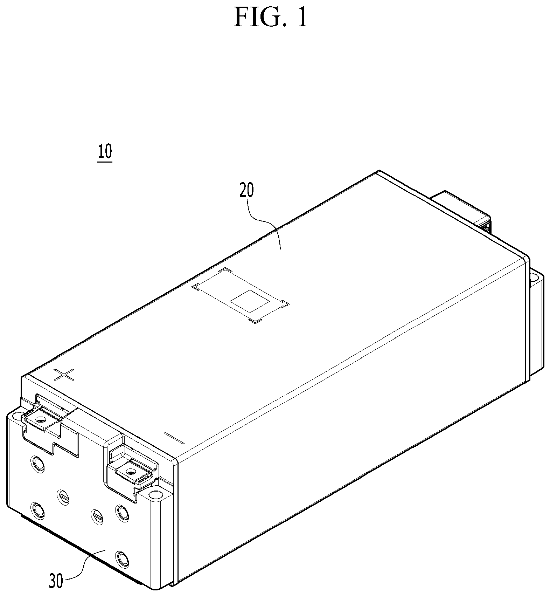

FIG. 1 is a view showing a conventional battery module.

As shown in FIG. 1, a conventional battery module 10 is configured to accommodate a battery cell stacked member in a space surrounded by a module frame 20 and an end plate 30. At this time, since there is no means to visually monitor the battery cell stacked member from the outside, even if ignition occurs inside the battery module 10, it is difficult to detect it until a flame is transmitted to the outside or an explosion occurs. In addition, since it is impossible to directly observe the heat transfer process from the inside, there is a problem in that it is difficult to present an appropriate solution by investigating it when the ignition occurs.

### [Disclosure]

### [Technical Problem]

Embodiments of the present invention to be proposed to solve the problems as described above are to provide a battery module capable of inducing a gas flow inside the battery module in a specific direction and observing the gas flow as well.

### [Technical Solution]

The solution is the invention of a battery module according to claim 1. Document KR 2019 0122474 A discloses the preamble of claim 1, namely: A battery module which includes: a battery cell stacked member including at least one battery cell; a bus bar frame covering the upper surface of the battery cell stacked member and the side on which the lead of the battery cell is protruded; a module frame for accommodating a coupled body of the battery cell stacked member and the bus bar frame; and a pair of end plates coupled to the surface where the lead of the battery cell is disposed at both ends of the module frame, wherein a plurality of gas inducing holes are formed in at least one of an upper frame of the bus bar frame, an upper surface of the module frame, and the end plate.

In further embodiments of the invention the gas inducing hole may be formed in the upper surface of the module frame.

Gas inducing holes may be arranged to form a plurality of columns along the length direction of the upper surface of the battery cell stacked member.

At least one of a plurality of columns may be disposed adjacent to the edge of the upper surface of the module frame.

The gas inducing holes may be formed in the upper frame of the bus bar frame.

The gas inducing holes may be arranged to form a plurality of columns along the length direction of the upper surface of the battery cell stacked member.

At least one of a plurality of columns may be disposed adjacent to the edge of the upper frame of the bus bar frame.

The gas inducing hole may be formed in the end plate.

The gas inducing hole may be formed on only one side of a pair of end plate.

According to the invention the gas inducing hole include at least three holes disposed in a line in the central portion of the height direction of the end plate.

A battery pack according to another embodiment of the present invention may include at least one or more of the above-described battery modules.

### [Advantageous Effects]

According to embodiments of the present invention, by inducing the gas flow generated during ignition inside the battery module through the gas inducing holes in a specific direction, and observing such a gas flow through the gas inducing hole, an appropriate solution to delay ignition inside the battery module may be provided.

### [Description of the Drawings]

FIG. 1 is a view showing a conventional battery module.
FIG. 2 is an exploded perspective view for a battery module according to an embodiment of the present invention.
FIG. 3 is a perspective view of a battery module according to another embodiment of the present invention.
FIG. 4 is a view of a battery module of FIG. 3 viewed from an upper side.
FIG. 5 is a perspective view of a battery module according to another embodiment of the present invention.

### [Mode for Invention]

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

Descriptions of parts not related to the present invention are omitted, and like reference numerals designate like elements throughout the specification.

Further, since sizes and thicknesses of constituent members shown in the accompanying drawings are arbitrarily given for better understanding and ease of description, the present invention is not limited to the illustrated sizes and thicknesses. In the drawings, the thickness of layers, films, panels, regions, etc., are exaggerated for clarity. In the drawings, for better understanding and ease of description, the thicknesses of some layers and areas are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" or "above" means positioned on or below the object portion, and does not necessarily mean positioned on the upper side of the object portion based on a gravitational direction.

In addition, unless explicitly described to the contrary, the word "comprise", and variations such as "comprises" or "comprising", will be understood to imply the inclusion of stated elements but not the exclusion of any other elements.

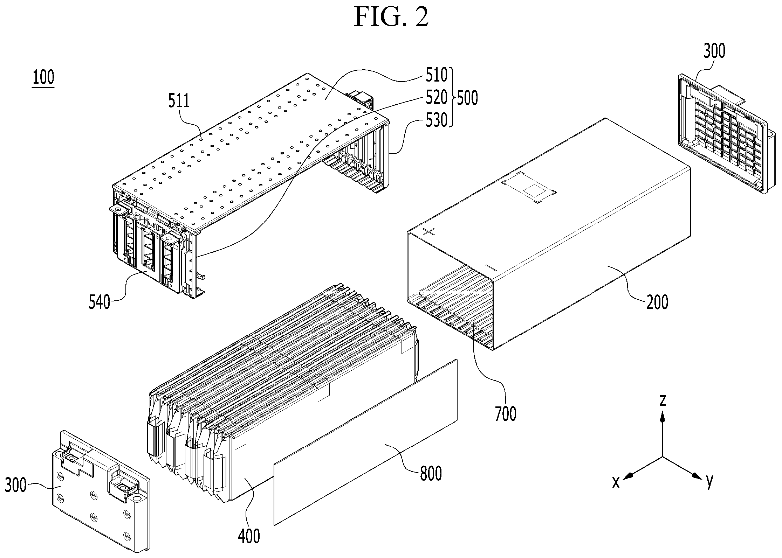

FIG. 2 is an exploded perspective view for a battery module according to an embodiment of the present invention.

Referring to FIG. 2, a battery module 100 according to an embodiment of the present invention includes a battery cell stacked member 400 including at least one battery cell, a module frame 200 for accommodating the battery cell stacked member 400, and a thermal conductive resin layer 700 positioned between the lower part of the battery cell stacked member 400 and the module frame 200.

The module frame 200 has opened front and back surfaces, and an end plate 300 covering the front and back surfaces may be provided. That is, In FIG. 2, both ends in the X-axis direction have an opened shape, and the end plate 300 is formed to cover the corresponding ends. In FIG. 2, the module frame 200 is shown to have an integral shape with a square tube shape, but it is not limited thereto, and it may have a shape of which the upper plate is combined with a U-shaped frame having a bottom surface and a side wall, or a shape of which the lower plate is combined with an inverted U-shaped frame with the upper surface and the side wall.

In addition, a bus bar frame 500 accommodated in the module frame 200 together with the battery cell stacked member 400 may be provided. The bus bar frame 500 may include an upper frame 510 positioned on upper part of the battery cell stacked member 400, a front frame 520 positioned on the front of the battery cell stacked member 400 and a rear frame 530 positioned on the rear of the battery cell stacked member 400, and the bus bar 540 connected to electrode leads of the battery cells constituting the battery cell stacked member 400 may be mounted on the front frame 520 and the rear frame 530. In the present embodiment, a plurality of gas inducing holes 511 are formed in the upper frame 510.

A plurality of gas inducing holes 511 may be disposed to form a plurality of columns along the length direction of the battery cell stacked member 400, that is, the X-axis direction in FIG. 2. At this time, at least one of a plurality of columns may be disposed adjacent to one edge of the upper frame 510. That is, in FIG. 2, it may be disposed adjacent to both edges in the Y-axis direction.

As such gas inducing holes 511 are formed in the upper frame 510 of the bus bar frame 500, when ignition occurs in the module, that is, the battery cell stacked member 400, the flow of the gas generated together is guided to the upper side, and then it is possible to prevent the propagation of the ignition to other modules adjacent to the module where the ignition occurred. In addition, it is possible to visually measure the flow of gas induced to the upper part of the bus bar frame 500, and through this, it is possible to propose a solution that may induce an ignition delay in the module. Particularly, by disposing the gas inducing holes 511 to form the column along the length direction of the battery cell stacked member 400, it is possible to induce the gas generated from the battery cell over the entire region of the length direction.

The gas inducing holes 511 may be formed by applying a punching process to the upper frame 510, and the punching method is not particularly limited, and methods such as drilling, punching, pressing, etc. may be applied.

On the other hand, the thermal conductive resin layer 700 is formed by being injected with a thermal conductive resin, and may include a thermal conductive adhesive material, and specifically, it may be formed by injecting a thermal conductive resin having fluidity, and then solidifying the thermal conductive resin in contact with the battery cell stacked member 400. That is, it may serve to transfer heat generated from the battery cell stacked member 400 to the bottom of the battery module 100 and to fix the battery cell stacked member 400 within the battery module 100. In addition, a heat dissipating plate 800 may be provided on the side of the battery cell stacked member 400 and be accommodated in the module frame 200 together.

As such, according to an embodiment of the present invention, by a plurality of gas inducing holes 511 provided in the upper frame 510 of the bus bar frame 500, when the battery cell inside the module ignites, the gas flow is guided to the upper surface, to prevent the ignition from propagating to other adjacent modules, and it is possible to provide an appropriate solution for the ignition delay by observing the gas flow.

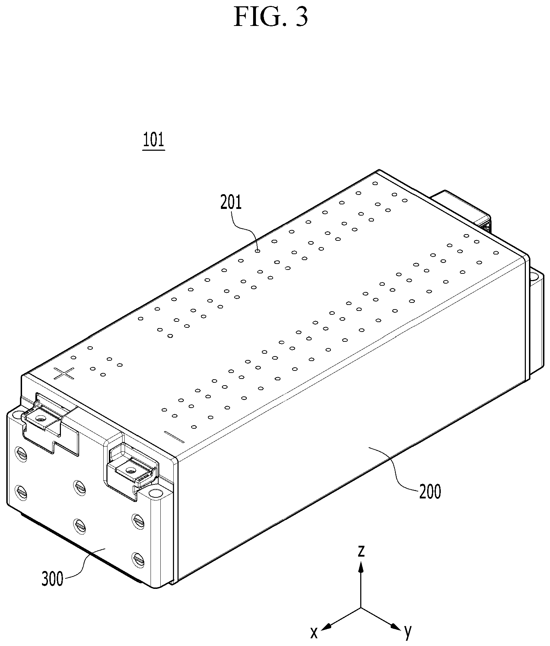

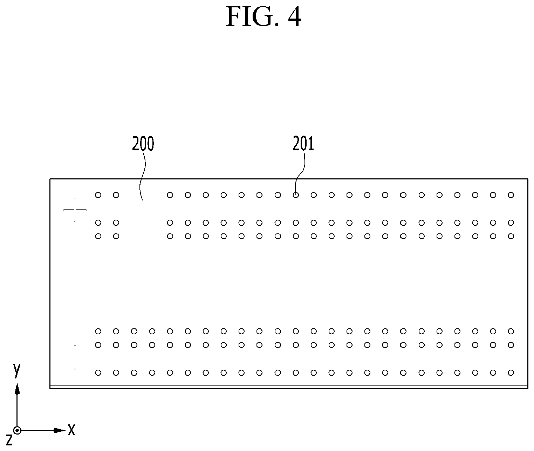

Next, the battery module according to another embodiment of the present invention is described with reference to FIG. 3 and FIG. 4.

FIG. 3 is a perspective view of a battery module according to another embodiment of the present invention. FIG. 4 is a view of a battery module of FIG. 3 viewed from an upper side.

Referring to FIG. 3 and FIG. 4, the battery module 101 according to another embodiment of the present invention includes a plurality of gas inducing holes 201 on the upper surface of the module frame 200. Other than that, the configuration is the same as the above-described embodiment, so the description thereof is omitted.

A plurality of gas inducing holes 201 may be disposed to form a plurality of columns along the length direction of the battery cell stacked member 400, that is, the X-axis direction in FIG. 3 and FIG. 4. At this time, at least one of the plurality of columns may be disposed adjacent to one edge of the upper surface of the module frame 200. That is, in FIG. 4, it may be disposed adjacent to both edges in the Y-axis direction.

As such gas inducing holes 201 are formed in the upper surface of the module frame 200, when ignition occurs in the module, that is, the battery cell stacked member 400, the flow of the gas generated together is guided to the upper side, and then it is possible to prevent the propagation of the ignition to other modules adjacent to the module where the ignition occurred. In addition, it is possible to visually measure the flow of gas induced to the upper part of the module frame 200, and through this, it is possible to propose a solution that may induce an ignition delay in the module. Particularly, by disposing the gas inducing holes 201 to form the column along the length direction of the battery cell stacked member 400, it is possible to induce the gas generated from the battery cell over the entire region of the length direction.

In addition, in this embodiment, it has been described that a plurality of gas inducing holes 201 are included in the upper surface of the module frame 200, but it is not limited thereto, and in combination with the previous embodiment, it is also possible to form the gas inducing holes 201 and 511 in the upper frame 510 of the bus bar frame 500 and the upper surface of the module frame 200.

The gas inducing holes 201 may be formed by applying a punching process to the upper surface of the module frame 200, and the punching method is not particularly limited, and methods such as drilling, punching, pressing, etc. may be applied.

As such, according to another embodiment of the present invention, by a plurality of gas inducing holes 201 provided in the upper surface of the module frame 200, when the battery cell inside the module ignites, the gas flow is guided to the upper surface, to prevent the ignition from propagating to other adjacent modules, and it is possible to provide an appropriate solution for the ignition delay by observing the gas flow.

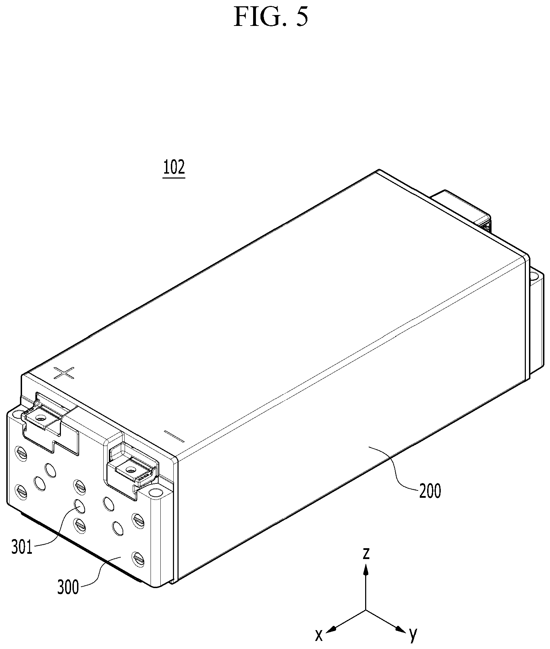

Next, the battery module according to another embodiment of the present invention is described with reference to FIG. 5.

FIG. 5 is a perspective view of a battery module according to another embodiment of the present invention.

Referring to FIG. 5, the battery module 102 according to another embodiment of present invention includes a plurality of gas inducing holes 301 in the end plate 300. Other than that, the configuration is the same as that of the above-described embodiment, so the description thereof is omitted.

A plurality of gas inducing holes 301 may be formed on either side of a pair of end plates 300. For example, it may be formed on the end plate 300 of the rear side of the battery module 102. Here, the rear surface may refer to a surface that is not adjacent to another battery module 102 when a plurality of battery modules 102 are assembled to form a battery pack, but is not limited thereto. At this time, the gas inducing hole 301, as shown in FIG. 5, may include at least three holes disposed in a line in the central portion of the height direction of the end plate 300 (i.e., the Z-axis direction of FIG. 5). However, it is not limited thereto, as shown in FIG. 5, it is possible to dispose the gas inducing hole 301 by being properly distributed to the entire area of the end plate 300.

As such gas inducing holes 201 are formed in the end plate 300, when ignition occurs in the module, that is, the battery cell stacked member 400, the flow of the gas generated together is guided to the upper side, and then it is possible to prevent the propagation of the ignition to other modules adjacent to the module where the ignition occurred. In addition, it is possible to visually measure the flow of gas induced to the end plate 300, and through this, it is possible to propose a solution that may induce an ignition delay in the module.

In addition, in this embodiment, it has been described that a plurality of gas inducing holes 301 are included in the end plate 300, but it is not limited thereto, and in combination with the previous embodiments, it is also possible to form the gas inducing holes 201 and 511 in the upper frame 510 of the bus bar frame 500 and the upper surface of the module frame 200, and then to additionally form the gas inducing holes 301 in the end plate 300. In addition, it is also possible to form the gas inducing hole on only one of the upper frame 510 of the bus bar frame 500 and the upper surface of the module frame 200, and apply the gas inducing hole 301 of the end plate 300 to this.

The gas inducing holes 301 may be formed by applying a punching process to the end plate 300, and the punching method is not particularly limited, and methods such as drilling, punching, pressing, etc. may be applied.

As such, according to another embodiment of the present invention, by a plurality of gas inducing holes 301 provided in the end plate 300, when the battery cell inside the module ignites, the gas flow is guided to the upper surface, to prevent the ignition from propagating to other adjacent modules, and it is possible to provide an appropriate solution for the ignition delay by observing the gas flow.

One or more battery modules according to the present embodiment described above may be mounted together with various control and protection systems such as a battery management system (BMS) and a cooling system to form a battery pack.

The battery module or battery pack can be applied to various devices. In this device, it can be applied to transportation means such as electric bicycles, electric vehicles, hybrid vehicles, and the like, but is not limited thereto, and can be applied to various devices that can use secondary batteries.

### [Description of Reference Numerals]

100, 101, 102: battery module
200: module frame
201, 511, 301: gas inducing hole
300: end plate
400: battery cell stacked member
500: bus bar frame
510: upper frame
700: thermal conductive resin layer
800: heat dissipating plate

## Claims

1. A battery module (100, 101, 12) comprising:
a battery cell stacked member (400) including at least one battery cell;
a bus bar frame (500) covering an upper surface of the battery cell stacked member (400) and a side of the battery cell stacked member (400) on which a lead of the battery cell is protruded;
a module frame (200) for accommodating a coupled body of the battery cell stacked member (400) and the bus bar frame (500), wherein both ends of the module frame (200) are open; and
a pair of end plates (300) configured to cover both ends of the module frame (200) and coupled to the surface where the lead of the battery cell is disposed at both ends of the module frame (200),
**characterized in that** a plurality of gas inducing holes (201, 511, 301) is formed in at least one of:
an upper frame (510) of the bus bar frame (500),
the upper surface of the module frame (200), and
the end plate (300), wherein at least three gas inducing holes (301) are disposed in a line in the central portion of the height direction of the end plate (300).

2. The battery module of claim 1, wherein
the gas inducing holes (201) are formed in the upper surface of the module frame (200).

3. The battery module of claim 2, wherein
the gas inducing holes (201) are arranged to form a plurality of columns along the length direction of the battery cell stacked member (400).

4. The battery module of claim 3, wherein
at least one of a plurality of columns is disposed adjacent to the edge of the upper surface of the module frame (200).

5. The battery module of claim 1, wherein
the gas inducing holes (511) are formed in the upper frame of the bus bar frame (500).

6. The battery module of claim 5, wherein
the gas inducing holes (511) are arranged to form a plurality of columns along the length direction of the battery cell stacked member (400).

7. The battery module of claim 6, wherein
at least one of a plurality of columns is disposed adjacent to the edge of the upper frame of the bus bar frame (500).

8. The battery module of claim 1, wherein
the gas inducing hole is formed in the end plate (300).

9. The battery module of claim 8, wherein
the gas inducing hole (301) is formed on only one of a pair of end plates (300).

10. A battery pack including at least one battery module (100, 101, 102) of any one of claims 1-9.

## Patentansprüche

1. Batteriemodul (100, 101, 12) aufweisend:
ein Batteriezellenstapelelement (400), das mindestens eine Batteriezelle aufweist;
einen Sammelschienenrahmen (500), der eine obere Oberfläche des Batteriezellenstapelelements (400) und eine Seite des Batteriezellenstapelelements (400), auf der eine Leitung der Batteriezelle hervorsteht, abdeckt;
einen Modulrahmen (200) zum Aufnehmen eines gekoppelten Körpers des Batteriezellenstapelelements (400) und des Sammelschienenrahmens (500), wobei beide Enden des Modulrahmens (200) offen sind; und
ein Paar Endplatten (300), die konfiguriert sind, um beide Enden des Modulrahmens (200) abzudecken, und mit der Oberfläche gekoppelt sind, wo die Leitung der Batteriezelle an beiden Enden des Modulrahmens (200) angeordnet ist,
**dadurch gekennzeichnet, dass** mehrere gasinduzierende Löcher (201, 511, 301) in mindestens einem von Folgendem ausgebildet ist:
einem oberen Rahmen (510) des Sammelschienenrahmens (500),
der oberen Oberfläche des Modulrahmens (200), und
der Endplatte (300), wobei mindestens drei gasinduzierende Löcher (301) in einer Linie in dem zentralen Abschnitt der Höhenrichtung der Endplatte (300) angeordnet sind.

2. Batteriemodul nach Anspruch 1, wobei
die gasinduzierenden Löcher (201) in der oberen Oberfläche des Modulrahmens (200) ausgebildet sind.

3. Batteriemodul nach Anspruch 2, wobei
die gasinduzierenden Löcher (201) angeordnet sind, um mehrere Reihen entlang der Längsrichtung des Batteriezellenstapelelements (400) zu bilden.

4. Batteriemodul nach Anspruch 3, wobei
mindestens eine von mehreren Reihen benachbart zu dem Rand der oberen Oberfläche des Modulrahmens (200) angeordnet ist.

5. Batteriemodul nach Anspruch 1, wobei
die gasinduzierenden Löcher (511) in dem oberen Rahmen des Sammelschienenrahmens (500) ausgebildet sind.

6. Batteriemodul nach Anspruch 5, wobei
die gasinduzierenden Löcher (511) angeordnet sind, um mehrere Reihen entlang der Längsrichtung des Batteriezellenstapelelements (400) zu bilden.

7. Batteriemodul nach Anspruch 6, wobei
mindestens eine von mehreren Reihen benachbart zu dem Rand des oberen Rahmens des Sammelschienenrahmens (500) angeordnet ist.

8. Batteriemodul nach Anspruch 1, wobei
das gasinduzierende Loch in der Endplatte (300) ausgebildet ist.

9. Batteriemodul nach Anspruch 8, wobei
das gasinduzierende Loch (301) auf nur einer von einem Paar Endplatten (300) ausgebildet ist.

10. Batteriepack, das mindestens ein Batteriemodul (100, 101, 102) nach einem der Ansprüche 1 bis 9 aufweist.

## Revendications

1. Module de batterie (100, 101, 12) comprenant :
un élément empilé de cellules de batterie (400) comprenant au moins une cellule de batterie ;
un châssis de barre omnibus (500) couvrant une surface supérieure de l'élément empilé de cellules de batterie (400) et un côté de l'élément empilé de cellules de batterie (400) sur lequel un conducteur de la cellule de batterie fait saillie ;
un châssis de module (200) pour accueillir un corps couplé de l'élément empilé de cellules de batterie (400) et le châssis de barre omnibus (500), les deux bouts du châssis de module (200) étant ouverts ; et
une paire de plaques terminales (300) configurées pour couvrir les deux bouts du châssis du module (200) et couplées à la surface où le conducteur de la cellule de batterie est disposé aux deux bouts du châssis du module (200),
et **caractérisé en ce qu'**une pluralité de trous d'induction de gaz (201, 511, 301) étant formés dans au moins un des éléments suivants :
un châssis supérieur (510) du châssis de barre omnibus (500),
la surface supérieure du châssis du module (200),
la plaque terminale (300), au moins trois trous d'induction de gaz (301) étant disposés en ligne dans la partie centrale du sens de la hauteur de la plaque terminale (300).

2. Module de batterie selon la revendication 1,
les trous d'induction de gaz (201) étant formés dans la surface supérieure du châssis du module (200).

3. Module de batterie selon la revendication 2,
les trous d'induction de gaz (201) étant disposés pour former une pluralité de colonnes dans le sens de la longueur de l'élément empilé de cellules de batterie (400).

4. Module de batterie selon la revendication 3,
au moins une colonne parmi une pluralité de colonnes étant disposée adjacente au bord de la surface supérieure du châssis de module (200).

5. Module de batterie selon la revendication 1,
les trous d'induction de gaz (511) étant formés dans le châssis supérieur du châssis du module (500).

6. Module de batterie selon la revendication 5,
les trous d'induction de gaz (511) étant disposés pour former une pluralité de colonnes dans le sens de la longueur de l'élément empilé de cellules de batterie (400).

7. Module de batterie selon la revendication 6,
au moins une de la pluralité de colonnes étant disposée adjacente au bord du châssis supérieur du châssis de module (500).

8. Module de batterie selon la revendication 1,
le trou d'induction de gaz étant formé dans la plaque d'extrémité (300).

9. Module de batterie selon la revendication 8,
le trou d'induction de gaz (301) étant formé sur une seule plaque terminale d'une paire de plaques terminales (300).

10. Bloc-batterie comprenant au moins un module de batterie (100, 101, 102) selon une quelconque des revendications 1 à 9.
